# EUROPÄISCHE PATENTSCHRIFT

(11) **EP 1 713 663 B1**
(45) Veröffentlichungstag und Bekanntmachung des Hinweises auf die Patenterteilung: **07.05.2008**
(21) Anmeldenummer: 05707224.1
(22) Anmeldetag: 04.02.2005
(51) Int. Cl.: B60R 21/015

(54) **SICHERHEITSVORRICHTUNG**
SAFETY DEVICE
DISPOSITIF DE SECURITE

(30) Priorität: 10.02.2004 DE 102004006518
(43) Veröffentlichungstag der Anmeldung: 25.10.2006
(73) Patentinhaber: AUTOLIV DEVELOPMENT AKTIEBOLAG, 447 83 Vargarda (SE)
(72) Erfinder: CLUTE, Günter, Bloomfield Hills, MI 48304 (US)
(74) Vertreter: Laufhütte, Dieter
(86) Internationale Anmeldenummer: PCT/EP2005/001181
(87) Internationale Veröffentlichungsnummer: WO 2005/077717

(56) Entgegenhaltungen:
- WO-A-01/17825
- WO-A-01/18507
- US-A1- 2002 027 345
- US-B1- 6 357 790

## Beschreibung

Die vorliegende Erfindung betrifft eine Sicherheitsvorrichtung mit einem Gurtsystem, wie es vorzugsweise in Kraftwagen zum Einsatz kommt.

Gurtsysteme werden aktuell häufig sowohl mit Gurtstraffern, die die Gurtlose bereits in einer frühen Phase des Zusammenstoßes beseitigen, und einem Lastbegrenzer, der ein Stück Gurt ausgibt, wenn die Gurtkraft über ein vorbestimmtes Niveau hinausgeht, ausgestattet.

Es besteht nun bekanntlich das Problem bei Gurtsystemen, die sowohl zum Zurückhalten von Erwachsenen wie auch Kindern eingesetzt werden, dass die Kraftniveaus sowohl der Gurtstraffer wie auch der Lastbegrenzer auf die Größe und das Gewicht eines Erwachsenen abgestimmt sind und damit zu groß für ein Kind sind. Dies spielt natürlich keine Rolle, wenn wie in der US 6357790 A, die als nächstliegender Stand der Technik angesehen wird, das Gurtsystem um einen Kindersitz gelegt ist. In dieser Schrift ist es bekannt, die Aktivierung sowohl eines Airbags wie auch eines Gurtstraffers zu unterdrücken, wenn das Vorhandensein eines Kindersitzes detektiert wird.

Für den Fall, dass ein Kindersitz in einem Erwachsenensitz integriert ist, wird in üblicher Weise derselbe Gurt für Erwachsene wie auch für Kinder verwendet. Für diesen Fall, in welchem der Kindersitz integriert ist, ist es vergleichsweise einfach, eine zuverlässige und sichere Erfassung des Kindersitzes zu schaffen, da die Form des Kindersitzes und seine Stellung, die er einnehmen kann, eindeutig festgelegt sind und daher leicht erkannt werden können.

Aufgabe der vorliegenden Erfindung ist es, eine Sicherheitsvorrichtung mit einem Gurtsystem derart weiterzubilden, dass eine unbeabsichtigte Verletzung von Kindern durch Aktivierung der Sicherheitsvorrichtung im Fall eines Zusammenstoßes sicher verhindert wird.

Erfindungsgemäß wird diese Aufgabe durch die Kombination der Merkmale des Anspruchs 1 gelöst. Demnach weist eine erfindungsgemäße Sicherheitsvorrichtung mit einem Gurtsystem mindestens einen Sitz auf, wobei der Sitz von einem Erwachsenensitz in einen Kindersitz umstellbar ist. Weiterhin ist ein Sitzmodussensor vorhanden zur Feststellung, ob ein Erwachsenensitz oder ein Kindersitz eingestellt ist, wobei das Gurtsystem zumindest zwei unterschiedliche Einstellungen aufweist, die entsprechend dem Ausgangssignal des Sitzmodussensors auswählbar sind. Das kleinere Kraftniveau entspricht dabei einem Kindermodus.

Somit kann eindeutig festgestellt werden, ob ein Erwachsener oder ein Kind auf dem entsprechenden Sitz durch die Sicherheitsvorrichtung geschützt wird.

Bevorzugte Ausführungsformen der Erfindung ergeben sich aus den sich an den Hauptanspruch anschließenden Unteransprüchen.

Demnach kann der Kindersitz ein auf dem Sitz liegendes Kissen umfassen. Dieses auf dem Sitz liegende Kissen kann auch in Form eines sogenannten Booster Cushion gebildet sein. Vorzugsweise weist das als Kindersitz dienende Kissen ein Identifikationsmittel auf, das über den Sitzmodussensor identifizierbar ist. Hierdurch kann der Sitzmodussensor bei Feststellen des Identifikationsmittels des Kissens ein Signal abgeben, das zeigt, dass das Kissen auf dem Sitz liegt.

Weiterhin kann der Kindersitz vorzugsweise auch ein im Sitz integrierbares Kissen, ein sogenanntes Integrated Booster Cushion (IBC) sein. Der Sitzmodussensor kann ein Schalter sein, der entsprechend durch das integriert ausfahrbare Kissen beaufschlagt wird.

Das Ausgangssignal des Sitzmodussensors zeigt an, ob sich das integrierte ausfahrbare Kissen in einer abgesenkten Position (Erwachsenensitz) oder in einer erhöhten Position (Kindersitz) befindet.

Vorteilhaft weist das Gurtsystem einen Gurtstraffer auf. Gemäß einer besonderen Ausführungsvariante der Erfindung weist der Gurtstraffer unterschiedlich einstellbare Niveaus für die zur Anwendung kommende Gurtstrafferkraft auf.

Weiterhin kann das Gurtsystem einen adaptiven Lastbegrenzer für die Gurtaufrollvorrichtung aufweisen. Vorteilhaft weist der Lastbegrenzer zumindest zwei unterschiedliche Kraftniveaus auf, einmal ein Kraftniveau, das bei erwachsenen Insassen und ein Kraftniveau, das bei Kindern wirksam ist. Es ist aber auch denkbar, einen Lastbegrenzer mit noch mehr Kraftniveaus auszustatten, wobei hier beispielsweise eine Abstufung unterschiedlicher Kraftniveaus nach der Größe oder dem Alter der Kinder erfolgt.

Weitere Merkmale, Einzelheiten und Vorteile der Erfindung ergeben sich aus einem in der Zeichnung dargestellten Ausführungsbeispiel. Es zeigen:
- Fig. 1:: eine schematische Darstellung einer Sicherheitsvorrichtung in einer ersten Stellung,
- Fig. 2:: eine Sicherheitsvorrichtung gemäß Fig. 1 in einer anderen Stellung,
- Fig. 3:: eine alternative Ausgestaltung der Erfindung in einer ersten Stellung und
- Fig. 4:: die Ausführungsform gemäß Fig. 3 in einer anderen Stellung.

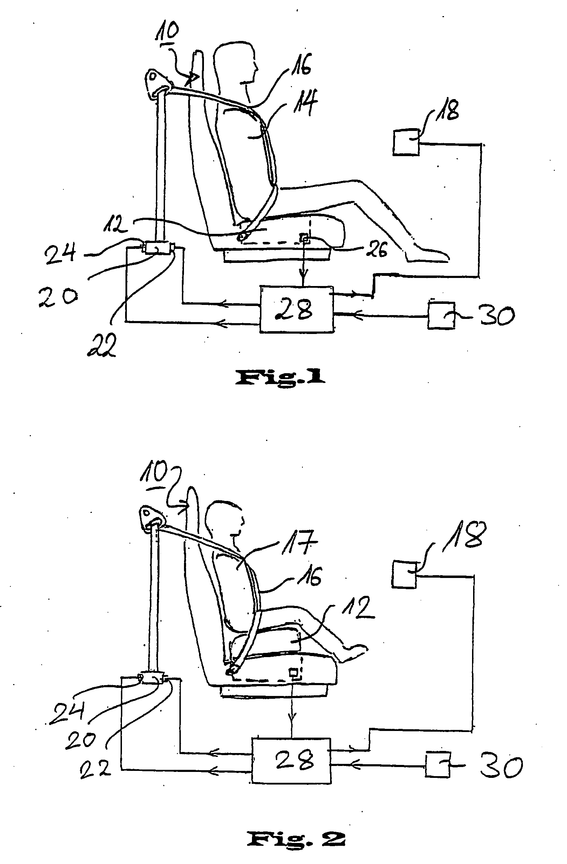

In Fig. 1 ist schematisch ein Autositz 10 gezeigt, der einen integrierten Kindersitz in Form eines integriert ausfahrbaren Kissens 12 aufweist. Diese integriert ausfahrbaren Kissen werden im Englischen als Integrated Booster Cushion oder kurz IBC bezeichnet. In Fig. 1 ist das integriert ausfahrbare Kissen 12 als Kindersitz in seiner versenkten Position dargestellt, so dass der Sitz 10 hier als Sitz für einen Erwachsenen 14 dient. Der Erwachsene 14 ist durch einen entsprechenden Sicherheitsgurt 16 geschützt. Der Gurt 16 ist Teil eines Zusammenstoßschutzsystems, das neben dem Gurt 16 eine Airbageinheit 18 umfasst. Der Gurt 16 stellt einen handelsüblichen Sicherheitsgurt dar, an dessen Aufroller in bekannter Weise ein Gurtstraffer 22 und andererseits ein Lastbegrenzer 24 angeordnet sind.

Im Bereich des integriert ausfahrbaren Kissens 12 ist ein Sitzmodussensor 26, der als Schalter ausgebildet ist, vorgesehen. Dieser Sitzmodussensor stellt fest, ob sich das ausfahrbare Kissen 12 in der abgesenkten Position entsprechend Fig. 1 oder in der ausgefahrenen Position als Kindersitz entsprechend Fig. 2 befindet. Das Ausgangssignal des als Schalter ausgebildeten Sitzmodussensors 26 wird in eine Steuereinheit 28 eingegeben. Die Steuereinheit ist in üblicher und bekannter Art und Weise mit einem Zusammenstoßsensor 30, mit der Airbageinheit 18 und dem entsprechenden Gurtstraffer bzw. Lastbegrenzer 24 des Gurtes 16 verbunden.

Erfindungsgemäß weist das Zusammenstoßschutzsystem zwei unterschiedliche Einstellungen auf, die entsprechend dem Ausgangssignal des Sitzmodussensors 26 auswählbar sind. Im hier dargestellten Ausführungsbeispiel bedeutet dies, das entsprechend Fig. 1 eine Einstellung für einen erwachsenen Insassen gewählt wird, während bei ausgefahrenem integrierten Kissen, d. h. also bei aktiviertem Kindersitz 12 gemäß Fig. 2, eine andere Einstellung des Gurtstraffers 22, des Lastbegrenzers 24 und der Airbageinheit 18 gewählt wird.

Konkret bedeutet dies, dass der Gurtstraffer bei Aktivierung des Kindersitzes 12 gemäß Fig. 2 eine geringere Straffkraft aufweist und dass auch der Lastbegrenzer 24 ein geringeres Kraftniveau aufweist, während die Airbageinheit einen vergleichsweise geringeren Gasvolumenstrom bzw. ein kleineres Füllvolumen für den Airbag aufweist, soweit der Kindersitz aktiviert ist.

Bei eingefahrenem Kindersitz 12 entsprechend Fig. 1, werden die entsprechenden Werte des Gurtstraffers 22, des Lastbegrenzers 24 und des Airbags 18 wieder auf das Niveau für ein Zusammenstoßschutzsystem für Erwachsene gebracht:

Alternativ kann bei entsprechender Aktivierung eines Kindersitzes der Gurtstraffer auch vollständig inaktiviert werden. In gleicher Weise kann auch die Airbageinheit 18 im Rahmen der Erfindung vollständig abgeschaltet werden.

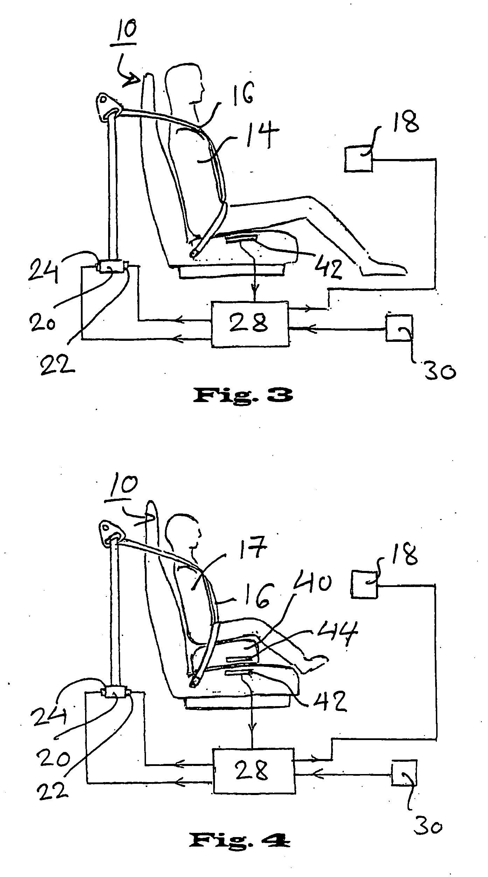

Die Figuren 3 und 4 zeigen eine alternative Ausgestaltung der Erfindung. Gleiche Teile sind hier mit gleichen Bezugszeichen versehen. Die zweite Ausführungsvariante unterscheidet sich von der ersten durch die Art und Weise der Realisierung des Kindersitzes. Während in der anhand der Figur 1 und 2 erläuterten Ausführungsvariante ein integriert ausfahrbares Kissen 12 vorhanden war, ist in der in den Figuren 3 und 4 dargestellten Ausführungsvariante ein separat auf den Sitz 10 auflegbares Kissen 40 vorgesehen. In dem Kissen 40 ist ein Identifizierungsmittel 44 integriert, das von dem Sitzmodussensor 42 erfassbar ist. Liegt also ein Kissen 40 auf dem Sitz 10, gibt der Sitzmodussensor 26 ein entsprechendes Signal an die Steuereinheit 28 ab. Dies ist in Fig. 4 dargestellt. In der Fig. 3 ist dagegen kein entsprechendes Kissen 40 mit entsprechendem Identifizierungsmittel 44 vorhanden, so dass hier kein Signal vom Sitzmodussensor 42 an die Steuereinheit 28 gegeben wird. In der Darstellung gemäß Fig. 3 wird das Kraftniveau für einen Erwachsenen eingestellt, da hier von dem Sitzmodussensor 42 kein Kissen 40 festgestellt wird, während in der Figur 4 das Kraftniveau für das Gurtsystem auf ein Kind eingestellt wird, da hier das entsprechende Kissen 40 über das Identifizierungsmittel 44 erfasst wird.

## Patentansprüche

1. Sicherheitsvorrichtung mit einem Gurtsystem, mindestens einem Sitz (10), wobei der Sitz von einem Erwachsenensitz in einen Kindersitz (12) umstellbar ist, und einem Sitzmodussensor (26; 42) zur Feststellung, ob ein Erwachsenensitz oder ein Kindersitz (12) eingestellt ist, wobei das Gurtsystem zumindest eine Funktion mit zwei unterschiedlichen Kraftniveaus aufweist, die entsprechend dem Ausgangssignals des Sitzmodussensors (26; 42) auswählbar sind, wobei das kleinere Kraftniveau einem Kindermodus entspricht.

2. Sicherheitsvorrichtung nach Anspruch 1, **dadurch gekennzeichnet, dass** der Kindersitz (12) ein auf dem Sitz liegendes Kissen umfaßt.

3. Sicherheitsvorrichtung nach Anspruch 1, **dadurch gekennzeichnet, daß** das als Kindersitz (12) dienende Kissen ein Identifikationsmittel (44) aufweist, das über den Sitzmodussensor (26; 42) identifizierbar ist.

4. Sicherheitsvorrichtung nach Anspruch 1, **dadurch gekennzeichnet, dass** der Kindersitz (12) ein im Sitz integriert ausfahrbares Kissen ist.

5. Sicherheitsvorrichtung nach einem der vorangehenden Ansprüche, **dadurch gekennzeichnet, dass** der Sitzmodussensor (26; 42) ein Schalter ist.

6. Sicherheitsvorrichtung nach einem der vorangehenden Ansprüche, **dadurch gekennzeichnet, dass** das Ausgangssignal des Sitzmodussensors (26; 42) anzeigt, ob sich das integrierte ausfahrbare Kissen in seiner abgesenkten Position (Erwachsenensitz) oder in seiner erhöhten Position (Kindersitz) befindet.

7. Sicherheitsvorrichtung nach Anspruch 1, **dadurch gekennzeichnet, dass** das Gurtsystem einen Gurtstraffer (22) aufweist.

8. Sicherheitsvorrichtung nach Anspruch 7, **dadurch gekennzeichnet, dass** der Gurtstraffer (22) unterschiedlich einstellbare Niveaus für die zur Anwendung kommende Gurtstrafferkraft aufweist.

9. Sicherheitsvorrichtung nach Anspruch 7 oder 8, **dadurch gekennzeichnet, dass** das Gurtsystem einen adaptiven Lastbegrenzer (24) für die Gurtaufrollvorrichtung aufweist.

10. Sicherheitsvorrichtung nach Anspruch 9, **dadurch gekennzeichnet, dass** der Lastbegrenzer (24) zumindest zwei unterschiedliche Kraftniveaus aufweist.

## Claims

1. A safety apparatus comprising a belt system, at least one seat (10), wherein the seat can be converted from an adult's seat in a child's seat (12), and a seat mode sensor (26; 42) to determine whether an adult's seat or a child's seat (12) has been set, wherein the belt system has at least a function having two different force levels which can be selected in accordance with the output signal of the seat mode sensor (26; 42), wherein the lower force lever corresponds to a child mode.

2. A safety apparatus in accordance with claim 1, **characterised in that** the child's seat (12) includes a cushion lying on the seat.

3. A safety apparatus in accordance with claim 1, **characterised in that** the cushion serving as a child's seat (12) has an identification means (44) that can be identified via the seat mode sensor (26, 42).

4. A safety apparatus in accordance with claim 1, **characterised in that** the child's seat (12) is a cushion integrated in the seat so that it can be moved out.

5. A safety apparatus in accordance with any one of the preceding claims, **characterised in that** the seat mode sensor (26; 42) is a switch.

6. A safety apparatus in accordance with any one of the preceding claims, **characterised in that** the output signal of the seat mode sensor (26; 42) indicates whether the integrated cushion which can be moved out is in its lowered position (adult's seat) or in its raised position (child's seat).

7. A safety apparatus in accordance with claim 1, **characterised in that** the belt system has a belt tensioner (22).

8. A safety apparatus in accordance with claim 7, **characterised in that** the belt tensioner (22) has differently settable levels for the belt tensioner force which is applied.

9. A safety apparatus in accordance with claim 7 or claim 8, **characterised in that** the belt system has an adaptive load limiter (24) for the belt retraction device.

10. A safety apparatus in accordance with claim 9, **characterised in that** the load limiter (24) has at least two different force levels.

## Revendications

1. Dispositif de sécurité comportant un système de ceinture (10), au moins un siège (10), le siège pouvant être transformé d'un siège pour adulte en un siège pour enfant (12), et un capteur de mode de siège (26 ; 42) pour constater si un siège pour adulte ou un siège pour enfant (12) est adopté, le système de ceinture présentant au moins une fonction à deux niveaux de force différents sélectionnables en correspondance du signal de sortie du capteur de mode de siège (26 ; 42), le niveau de force plus faible correspondant à un mode enfant.

2. Dispositif de sécurité selon la revendication 1, **caractérisé en ce que** le siège pour enfant (12) comprend un coussin situé sur le siège.

3. Dispositif de sécurité selon la revendication 1, **caractérisé en ce que** le coussin servant de siège pour enfant (12) comprend un moyen d'identification (44) identifiable via le capteur de mode de siège (42).

4. Dispositif de sécurité selon la revendication 1, **caractérisé en ce que** le siège pour enfant (12) est un coussin déployable en étant intégré dans le siège.

5. Dispositif de sécurité selon l'une des revendications précédentes, **caractérisé en ce que** le capteur de mode de siège (26 ; 42) est un commutateur.

6. Dispositif de sécurité selon l'une des revendications précédentes, **caractérisé en ce que** le signal de sortie du capteur de mode de siège (26 ; 42) indique si le coussin intégré déployable se trouve dans sa position abaissée (siège pour adulte) ou dans sa position surélevée (siège pour enfant).

7. Dispositif de sécurité selon la revendication 1, **caractérisé en ce que** le système de ceinture comprend un tendeur de ceinture (22).

8. Dispositif de sécurité selon la revendication 7, **caractérisé en ce que** le tendeur de ceinture (22) présente des niveaux réglables différemment pour la force à appliquer du tendeur de ceinture.

9. Dispositif de sécurité selon la revendication 7 ou 8, **caractérisé en ce que** le système de ceinture comprend un limiteur de charge adaptif (24) pour le dispositif d'enroulement de ceinture.

10. Dispositif de sécurité selon la revendication 9, **caractérisé en ce que** le limiteur de charge (24) présente au moins deux niveaux de force différents.
